# EUROPÄISCHE PATENTSCHRIFT

(11) **EP 2 166 316 B1**
(45) Veröffentlichungstag und Bekanntmachung des Hinweises auf die Patenterteilung: **19.09.2018**
(21) Anmeldenummer: 09405141.4
(22) Anmeldetag: 20.08.2009
(51) Int. Cl.: G01F 1/075, G01F 1/08, G01F 15/14

(54) **Durchflussmesser für Flüssigkeiten**
Flowmeter for liquids
Débitmètre pour liquides

(30) Priorität: 22.09.2008 CH 14962008
(43) Veröffentlichungstag der Anmeldung: 24.03.2010
(73) Patentinhaber: Nestec S.A., 1800 Vevey (CH)
(72) Erfinder: Bäbler, Thomas, 8767 Elm (CH)
(74) Vertreter: Sacroug, Olivier

(56) Entgegenhaltungen:
- EP-A1- 0 045 588
- EP-A1- 0 447 811
- DE-A1- 2 442 020
- DE-C- 335 985
- US-A- 5 939 644

## Beschreibung

Die Erfindung betrifft einen Durchflussmesser für geringe Flüssigkeitsmengen entsprechend dem Oberbegriff des Patentanspruchs 1.

Ein Durchflussmesser dieser Art ist bekannt durch die US 5,939,644. Bei diesem bekannten Durchflussmesser befinden sich jedoch die Sensorgeber auf einem oberhalb des Flügelrades befestigten und in ein zentrales Sensorgehäuse hineinragenden Induktionsrotor, so dass der Abströmstutzen seitlich neben dem zentralen Sensorgehäuse angeordnet ist. Der Zuströmkanal dieses bekannten Durchflussmessers erstreckt sich durch einen tangential angeformten Gehäusestutzen und eine Bohrung in einem massiv ausgeführten Gehäusekörper.

Durch die DE 24 42 020, die EP 0 447 811, die DE 335 985 und die EP 0 045 588 sind für den Einbau in eine Wasserleitung bestimmte Durchflussmesser bekannt, die somit gleichachsige Zu- und Abströmkanäle aufweisen. Deren Durchmesser entspricht angenähert dem Radius des Flügelrades des Durchflussmessers. Um das mit der Achse des Flügelrades gekoppelte Zählwerk zu eichen, ist entsprechend den drei erstgenannten Schriften jeweils im Zuströmkanal ein den Strömungswiderstand beeinflussendes Kalibrierorgan eingesetzt, das entweder als asymmetrische Düse (DE 24 42 020), als Düsenscheibe (EP 0 447 811) oder als durch eine Justierschraube verformbarer Düsenkörper (DE 335 985) in den Zuströmkanal des Gerätes eingesetzt ist.

Der Erfindung liegt die Aufgabe zugrunde, einen Durchflussmesser der eingangs genannten Art zu finden, der bei kostengünstiger Herstellbarkeit besonders klein und kompakt ausführbar ist und der dennoch, auch beim Auftreten von Lufteinschlüssen infolge von häufigen Strömungsunterbrechungen, eine hohe Messgenauigkeit aufweist.

Die Lösung der gestellten Aufgabe erfolgt erfindungsgemäss aufgrund der kennzeichnenden Merkmale des Patentanspruchs 1. Im Folgenden wird die Erfindung mit ihren Vorteilen an Hand eines zeichnerisch dargestellten Ausführungsbeispieles näher erläutert. Es zeigt:

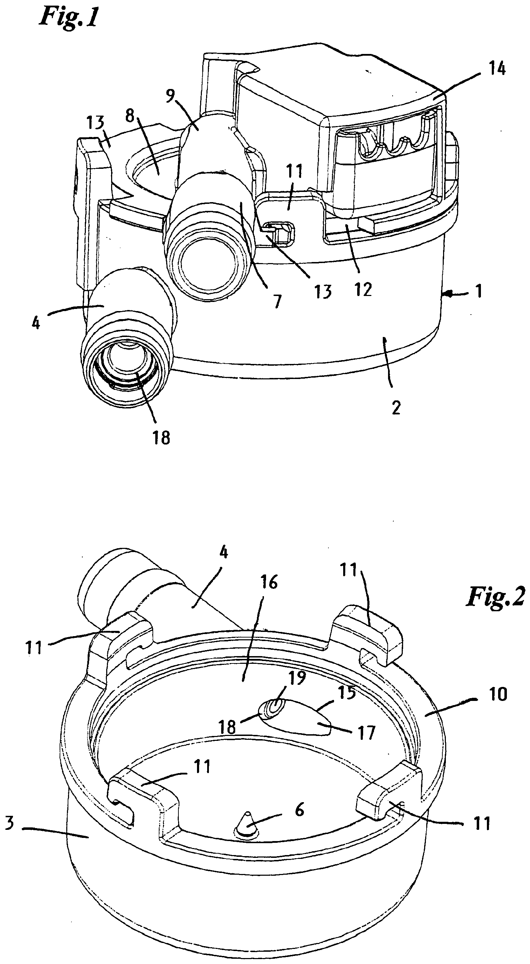

Fig.1 eine perspektivische Darstellung eines erfindungsgemässen Durchflussmessers,
Fig.2 eine perspektivische Darstellung des Messgehäuses des Durchflussmessers nach Fig.1 nach Entfernung seines Gehäusedeckels,

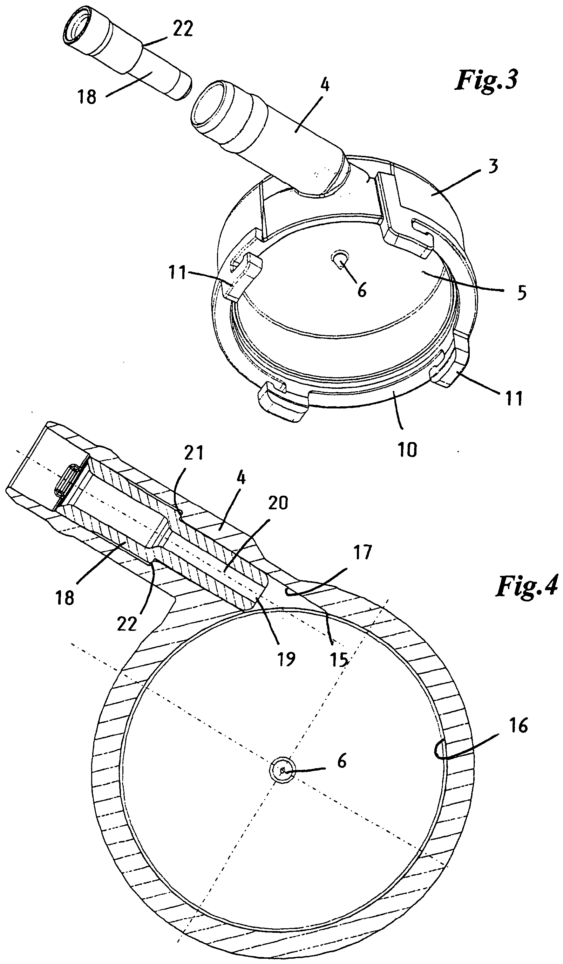

Fig.3 eine weitere perspektivische Darstellung des Messgehäuses nach Fig.2 mit zugehörigem, separat dargestelltem Düsenrohr und
Fig.4 einen entlang der Achse des eingesetzten Düsenrohres verlaufenden Radialschnitt durch das Messgehäuse nach Fig.2.

Der Durchflussmesser 1 hat ein zweiteiliges zylindrisches Messgehäuse 2 mit einem becherförmigen, ein nicht dargestelltes Flügelrad einschliessenden und dieses zentrisch lagernden Gehäuseteil 3, an dem ein tangential zum Gehäuseumfang gerichteter Zuströmstutzen 4 angeformt ist. Für die Lagerung der Achse des Flügelrades kann in der Mitte des Gehäusebodens 5 ein konischer Lagerzapfen 6 angeformt sein.

Der Abströmstutzen 7 ist an einem den becherförmigen Gehäuseteil 3 verschliessenden Gehäusedeckel 8 zentrisch angeformt, so dass er die zyklonartig tangential einströmende und zentrisch axial abströmende Flüssigkeit ableiten kann.

Um den Durchflussmesser 1 raumsparend in einem von der jeweiligen Anwendung bestimmten Maschinengehäuse, z.B. einer Kaffeemaschine, einbauen zu können, geht der Abströmstutzen 7 vorzugsweise über eine 90°-Krümmung 9 in eine zum Zuströmstutzen parallele Richtung über.

Für die feste und dichte Verrastung zwischen dem becherartigen Gehäuseteil 3 und dem Gehäusedeckel 8 sind am Rand 10 des Gehäuseteiles 3 nach Art eines Bajonettverschlusses mehrere hakenförmige Rastnasen 11 angeformt, die in Randlücken 12 des Gehäusedeckels 8 hineinragen und dort mit dem angrenzenden Umfangsrand 13 des Gehäusedeckels 8 verrastet sind. Folglich lässt sich diese Verrastung durch eine kurze Verdrehung des aufgesetzten Gehäusedeckels 8 gegenüber dem Gehäuseteil 3 herstellen.

Weiterhin ist am Gehäusedeckel 8 ein Nebengehäuse 14 für einen Sensor vorgesehen, der z.B. aufgrund des Hall-Effekts auf mindestens ein am Flügelrad vorgesehenes und somit mit diesem umlaufenden Sensorgeber anspricht, um aufgrund der Umdrehungen des Flügelrades die das Messgehäuse durchströmende Flüssigkeitsmenge zu bestimmen.

Um nach Beginn der zyklonartigen Durchströmung des Durchflussmessers möglichst bald eine genaue Messung der durchströmenden Flüssigkeitsmenge vornehmen zu können, ist es erforderlich, sich im Strömungsweg der Flüssigkeit befindliche Luft möglichst schnell und vollständig zu verdrängen. Hierfür muss die Flüssigkeit einen möglichst genau definierten, d.h. konstanten bzw. störungsfreien Strömungsweg finden, für die die Ausbildung und Anordnung des Zuströmkanals einen mit entscheidenden Einfluss hat.

Bei kostengünstiger Herstellung des Messgehäuses 3 in Kunststoffspritztechnik bereitet es jedoch insbesondere bei kleinen Dimensionen Schwierigkeiten eine gratfreie Übergangskante 15 entlang der geometrischen Durchdringungslinie zwischen den zylindrischen Innenflächen 16, 17 des Messgehäuses 2 bzw. des Gehäuseteils 3 und eines Zuströmstutzens 4 herzustellen, da an dieser Stelle zwei Formwerkzeuge aneinander grenzen und zwischen beiden eine hochpräzise, dichtende Presskante vorzusehen ist, mit der Folge, dass sich beim Kunststoffspritzen an der Übergangskante 15 ein Grat bzw. eine ungenaue Kantengeometrie ausbildet und beim Durchströmen sich dort Verwirbelungen mit eingeschlossenen Luftblasen ergeben, die die Messgenauigkeit nachteilig beeinflussen. Weiterhin bereitet es Schwierigkeiten bei kleinen Dimensionen des Gehäuseteils 3 und entsprechend des Zuströmstutzens 4 die für ihre Herstellung zusammenwirkenden Formwerkzeuge ausreichend zu kühlen, so dass hierdurch ihre mögliche Taktfrequenz der Spritzgiessfertigung begrenzt ist.

Da die Messung über die Drehgeschwindigkeit des Flügelrades erfolgt, soll diese somit möglichst exakt der Zuströmmenge proportional sein. Für eine hierfür präzise Ausbildung und Ausrichtung des Düsenstrahles und die Möglichkeit besonders kleiner Dimensionierung des Durchflussmessers in Kunststoffspritztechnik wird der Düsenstrahl erfindungsgemäss in einem Düsenrohr 18 gebildet, das in den Zuströmstutzen (4) des Messgehäuses (2) eingesetzt ist. Auf diese Weise erhält die Ausströmöffnung 19 des Düsenrohrs 18 einen ausreichenden Abstand von der zuvor beschriebenen.Übergangskante 15, so dass die in das Messgehäuse 2 einströmende Flüssigkeit nicht auf diese Übergangskante 15 trifft und folglich dort keinen Luftblasen zurückhaltenden Verwirbelungen ausgesetzt ist.

Eine exakte axiale Positionierung des Düsenrohrs 18 im Zuströmstutzen 4) ergibt sich dadurch, dass der Zuströmstutzen 4 eine umlaufende Innenschulter 21 und das Düsenrohr 18 eine umlaufende Aussenschulter 22 aufweist, so dass deren gegenseitiger Kontakt die axiale Position des Düsenrohrs 18 relativ zum Messgehäuse 2 fixiert.

Die separate Herstellung eines Düsenrohres 18 in Kunststoffspritztechnik ermöglicht ausserdem die Verwendung einfach gestalteter und leicht zu kühlender Formwerkzeuge und eine präzisere Ausführung seines Düsenkanals 20. Weiterhin ermöglicht die separate Herstellung des Düsenrohres die Verwendung desselben Messgehäuses 2 mit verschieden dimensionierten Düsenkanälen 20 zur optimalen Anpassung an die jeweilige Anwendung des Durchflussmessers 1.

## Patentansprüche

1. Durchflussmesser für kleine Flüssigkeitsmengen, mit einem ein Flügelrad umschliessenden und dieses drehbar lagernden, zylindrischen, becherförmigen Teil (3) eines Messgehäuses (2), einem an diesen tangential in Kunststoffspritztechnik angeformten Zuströmstutzen (4), einem an einem Gehäusedeckel (8) angeformten, eine 90°-Krümmung aufweisenden und somit in einen parallel zum Gehäusedeckel verlaufenden Bereich übergehenden Abströmstutzen (7) und einem am Messgehäuse (2) vorgesehenen Sensor zur Ermittlung der das Messgehäuse (2) durchströmenden Flüssigkeitsmenge aufgrund der Umdrehungen des Flügelrades, **dadurch gekennzeichnet, dass** der Abströmstutzen (7) zentral an den Gehäusedeckel (8) angeformt ist und der an das Messgehäuse (2,3) tangential angeformte Zuströmstutzen (4) ein in diesen eingesetztes, einen Düsenkanal (20) bildendes, entsprechend der Richtung des Zuströmstutzens (4) tangential einmündendes Düsenrohr (18) umschliesst, so dass der Durchflussmesser (1) die zyklonartig tangential einströmende und zentrisch axial abströmende Flüssigkeit ableiten kann.

2. Durchflussmesser nach Anspruch 1, **dadurch gekennzeichnet, dass** der Sensor in einem am Gehäusedeckel (8) vorgesehenen Nebengehäuse (14) vorgesehen ist und auf mindestens einen, mit dem Flügelrad umlaufenden Sensorgeber anspricht.

3. Durchflussmesser nach Anspruch 1, **dadurch gekennzeichnet, dass** das Düsenrohr (18) in dem Zuströmstutzen (4) derart angeordnet ist, dass seine Ausströmöffnung (19) gegenüber der zylindrischen Innenfläche (16) des Gehäuseteils (3) im Zuströmstutzen (4) zurückversetzt ist.

4. Durchflussmesser nach Anspruch 1 bis 3, **dadurch gekennzeichnet, dass** der Zuströmstutzen (4) eine umlaufende Innenschulter (21) und das Düsenrohr (18) eine umlaufende Aussenschulter (22) aufweist, so dass deren gegenseitiger Kontakt die axiale Position des Düsenrohrs (18) relativ zum Messgehäuse (2) fixiert.

5. Durchflussmesser nach einem der Ansprüche 1 bis 4, **dadurch gekennzeichnet, dass** der Gehäusedeckel (8) über am becherförmigen Gehäuseteil (3) angeformte Rastnasen (11) an diesem verriegelt ist.

6. Durchflussmesser nach einem der Ansprüche 1 bis 5, **dadurch gekennzeichnet, dass** der Abströmstutzen (7) einen parallel zum Zuströmstutzen (4) verlaufenden Bereich aufweist.

## Claims

1. Flow meter for small quantities of liquid, with a cylindrical cup-shaped part (3) of a measurement housing (2) enclosing and rotatably bearing an impeller, with an inflow connector (4) molded tangentially onto said part by plastic injection molding, with an outflow connector (7) molded onto a housing cover (8) and having a 90° curvature and thus transitioning into an area running parallelly to said housing cover, and with a sensor provided on the measurement housing (2) for determining the quantity of liquid flowing through the measurement housing (2) due to the revolutions of the impeller, **characterized in that** the outflow connector (7) is molded centrally onto the housing cover (8) and the inflow connector (4) molded tangentially onto the measurement housing (2, 3) encloses a nozzle tube (18), which is inserted into said inflow connector, forms a nozzle channel (20), and opens tangentially according to the direction of the inflow connector (4), so that the flow meter (1) can conduct away the liquid flowing in tangentially in a cyclone-like manner and flowing out concentrically axially.

2. Flow meter according to claim 1, **characterized in that** the sensor is provided in a secondary housing (14) provided on the housing cover (8) and responds to at least one sensor element rotating with the impeller.

3. Flow meter according to claim 1, **characterized in that** the nozzle tube (18) is arranged in the inflow connector (4) in such a way that its outlet opening (19) is set back in the inflow connector (4) with respect to the cylindrical inner surface (16) of the housing part (3).

4. Flow meter according to claims 1 through 3, **characterized in that** the inflow connector (4) has a circumferential internal shoulder (21) and the nozzle tube (18) has a circumferential external shoulder (22), so that their mutual contact fixes the axial position of the nozzle tube (18) relative to the measurement housing (2).

5. Flow meter according to one of claims 1 through 4, **characterized in that** the housing cover (8) is locked onto the cup-shaped housing part (3) via engagement noses (11) molded onto said part.

6. Flow meter according to one of claims 1 through 5, **characterized in that** the outflow connector (7) has an area running parallelly to the inflow connector (4).

## Revendications

1. Débitmètre pour de petites quantités de liquide, comprenant une partie (3) d'un boîtier de mesure (2) en forme de coupe, cylindrique, entourant une roue à ailettes et la supportant à rotation, un raccord d'entrée (4) réalisé tangentiellement sur celui-ci selon la technique d'injection de plastique, un raccord (7) de sortie réalisé sur le couvercle (8) de boîtier, présentant une courbure à 90° et par conséquent en continuité avec une zone s'étendant parallèlement au couvercle de boîtier et un capteur disposé sur le boîtier de mesure (2) destiné à déterminer la quantité de liquide traversant le boîtier de mesure (2) en raison des rotations de la roue à ailettes, **caractérisé en ce que** le raccord de sortie (7) est réalisé au centre sur le couvercle (8) de boîtier et le raccord d'entrée (4) réalisé tangentiellement sur le boîtier (2,3) de mesure entoure un tube (18) de buse débouchant tangentiellement dans celui-ci, formant un canal (20) de buse, correspondant à la direction du raccord d'entrée (4) de sorte que le débitmètre (1) puisse dévier le liquide sortant axialement et centralement et entrant tangentiellement de manière cyclonique.

2. Débitmètre selon la revendication 1, **caractérisé en ce que** le capteur est disposé dans un boîtier auxiliaire (14) disposé sur le couvercle (8) du boîtier et répond à au moins un émetteur de détection tournant avec la roue à ailettes.

3. Débitmètre selon la revendication 1, **caractérisé en ce que** le tube (18) de buse est disposé dans le raccord d'entrée(4) de telle sorte que son ouverture de sortie (19) soit décalée vers l'arrière par rapport à la surface intérieure (16) cylindrique de la partie (3) de boîtier dans le raccord d'entrée (4).

4. Débitmètre selon la revendication 1 à 3, **caractérisé en ce que** le raccord d'entrée (4) présente un épaulement intérieur (21) tournant et le tube (18) de buse présente un épaulement extérieur (22) tournant de telle sorte que leur contact réciproque bloque la position axiale du tube (18) de buse par rapport au boîtier de mesure (2).

5. Débitmètre selon l'une des revendications 1 à 4, **caractérisé en ce que** le couvercle (8) de boîtier est verrouillé par un ergot d'encliquetage (11) réalisé sur la partie (3) de boîtier en forme de coupe.

6. Débitmètre selon l'une des revendications 1 à 5, **caractérisé en ce que** le raccord de sortie (7) présente une zone s'étendant parallèlement au raccord d'entrée (4).
